# EUROPÄISCHE PATENTSCHRIFT

(11) **EP 0 535 469 B1**
(45) Veröffentlichungstag und Bekanntmachung des Hinweises auf die Patenterteilung: **01.03.1995**
(21) Anmeldenummer: 92116007.3
(22) Anmeldetag: 18.09.1992
(51) Int. Cl.: F16C 29/04

(54) **Linearführung**
Linear guide
Palier linéaire

(30) Priorität: 02.10.1991 DE 9112285 U
(43) Veröffentlichungstag der Anmeldung: 07.04.1993
(73) Patentinhaber: ISEL AUTOMATION HUGO ISERT, D-36132 Eiterfeld (DE)
(72) Erfinder: Isert, Hugo, W-6419 Eiterfeld 1 (DE); Scheich, Hubert, W-6419 Eiterfeld-Arzell (DE)
(74) Vertreter: Olbricht, Karl Heinrich, Dipl.-Phys.

(56) Entgegenhaltungen:
- EP-A- 0 202 595
- EP-A- 0 207 215
- EP-B- 0 245 656
- DE-A- 3 040 711
- DE-A- 3 428 680
- US-A- 4 359 917

## Beschreibung

Die Erfindung betrifft eine Linearführung gemäß dem Oberbegriff von Anspruch 1.

Für die verschiedensten Anwendungen beispielsweise in der feinmechanischen und elektronischen Industrie benötigt man Führungsmittel, die eine exakte Translationsbewegung ermöglichen. Dazu dient im einfachsten Falle eine von einem Träger unterstützte Welle, die von einer offenen Kugelbüchse übergriffen wird, welche eine Kopfplatte zur Abstützung eines Geräts aufweisen kann. Das stellt allerdings keine verdrehsichere Führung dar.

In der FR-A-1 124 901 wurde eine Schiene vorgeschlagen, deren Kopf beiderseits Wellenpaare trägt, denen gleichartige Wellenpaare eines übergreifenden Laufwagens gegenüberstehen. Eine Vielzahl von Kugeln zwischen den jeweils benachbarten Wellenpaaren soll einen leichten Lauf des Wagens erlauben. Der Aufwand ist jedoch groß, zumal die Kugeln in kontinuierlicher Folge entlang der gesamten Schiene gehalten bzw. gefesselt sein müssen. Wie auch gemäß CH-A-347 049 werden die beiden Wellen jedes Paares z.T. in einer breiten Rechteck-Nut lediglich durch die Köpfe weniger in Seitenflanschen sitzender Schrauben gehalten, so daß jedenfalls bei Belastungen nur sehr mangelhafte Parallelität gegeben ist.

Andere Führungssysteme z.B. gemäß DE-A-3 040 711 und EP-B1-0 080 515 bedienen sich zur Führung eines Laufwagens, der über Rollenpaare oder Linearkugellager abgestützt sein kann, jeweils zweier Wellen, die auf einer Anzahl Böcken beiderseits gehaltert sind, oder Klemmprofilen, welche die Wellen über die ganze Länge haltern, wobei genaue Passung eine unbedingte Voraussetzung ist. Eine Druckplatte kann die Wellen am Außenrand oben übergreifen und gegebenenfalls nach innen pressen. Dabei ist jedoch kritisch, wie stark die Befestigungsschrauben angezogen werden, welche die einzelnen Böcke durchsetzen, da eine Verformung der Wellen eintreten kann.

Nach EP-B1-0 245 656 dienen Paßstücke dazu, die Wellen in dem als einstückiges Klemmprofil ausgebildeten Schienenkörper festzulegen. Dessen Befestigungselemente haben zwar keinen Einfluß auf die Klemmkraft, mit der die Wellen in ihrer Lage gehalten werden. Strengste Parallelität ist aber auch hier nicht gewährleistet, zumal eine Verschraubung der Wellen nicht vorgesehen ist. Das gilt ebenso für eine sog. Laufrollenführung, deren Wellen in Nuten eines Tragkörpers beiderseits eingewalzt sind.

Es ist ein wichtiges Ziel der Erfindung, unter Überwindung der Nachteile des Standes der Technik eine verbesserte Linearführung zu schaffen, die bei möglichst einfachem Aufbau und geringem Gewicht ein Höchstmaß an Genauigkeit und Stabilität bietet. Herstellung und Montage sollen sich rasch und zuverlässig ausführen lassen. Unterschiedliche Geschwindigkeits- und Belastungs-Anforderungen sollen durch wenig aufwendige Maßnahmen berücksichtigt werden können.

Hauptmerkmale der Erfindung sind in Anspruch 1 angegeben. Ausgestaltungen sind Gegenstand der Ansprüche 2 bis 20.

Bei einer Linearführung mit einem Auflager und darauf paarweise parallel gehaltenen Wellen, auf denen wenigstens ein zu führender Körper mittels Linearkugellagern, Rollen o.dgl. abstützbar ist, welche das Wellenpaar übergreifend an dessen freien Außenflächen roll- bzw. gleitbeweglich anliegen, sieht die Erfindung vor, daß die Wellen an dem Auflager durch zueinander im Winkel stehende Schrauben gegeneinander verspannt und in linienförmiger Anlage gehalten sind. Die so aufgebaute Linearführung verläuft bei beliebiger Länge exakt geradlinig parallel. Sie erlaubt die Verwendung von Präzisionsstahlwellen und bietet dank paarweiser Anordnung hohe Verdrehsicherheit.

Eine wichtige Maßnahme der Erfindung besteht laut Anspruch 2 darin, daß das bzw. jedes Auflager ein Stützprofil mit einer mittig angeordneten Firstkante und zwei dazu parallelen Außenkanten aufweist, deren Querabstand zur Firstkante kleiner als der Wellendurchmesser ist. Ein derartiges Auflager mit drei parallelen Anlagekanten läßt sich leicht sehr genau herstellen, so daß die Genauigkeit der Führung in den Abweichungsbereich von 10 »m bis 1 »m vordringt, was eine Verbesserung um eine ganze Größenordnung gegenüber der herkömmlichen Technik darstellt.

Dazu trägt vorteilhaft die Gestaltung nach Anspruch 3 bei, wonach das bzw. jedes Auflager eine dem Wellenradius formgleiche Hohlkehle zwischen der Firstkante und der einen Außenkante und stärker ausgekehlte Stufe zwischen der Firstkante und der anderen Außenkante aufweist. Man kann zunächst eine der beiden Wellen durch Verschraubung an der Rundkehle festlegen und dann die benachbarte zweite Welle durch die andere Verschraubung an die Stufe ziehen, so daß die beiden Wellen in gegenseitiger Anlage eine außerordentlich hohe Steifigkeit erhalten.

Eine weitere wichtige Maßnahme der Erfindung sieht nach Anspruch 4 vor, daß das bzw. jedes Auflager in Abständen angeordnete Gruppen von dicht benachbarten Schraublöchern aufweist, die das Auflager schräg durchsetzen und zur Firstkante spiegelsymmetrisch verlaufen. Diese Gestaltung erlaubt eine ebenso wirtschaftliche wie genaue Festlegung der Wellen, wodurch Fertigung und Montage gleichermaßen erleichtert und beschleunigt werden.

Nach Anspruch 5 kann jede Gruppe aus einem Paar zueinander entgegengesetzt geneigter Schraublöcher bestehen, so daß mit einem Minimum an Aufwand ein Höchstmaß an Wellen-Parallelität erzielbar ist. Anspruch 6 zieht aber auch Gruppen von drei Schraublöchern in Betracht, von denen ein in Längsrichtung mittleres Loch entgegen einem entlang der Firstkante spiegelsymmetrisch dazu angeordneten Gegenlochpaar geneigt ist. Eine solche Drei-Punkt-Abstützung ergibt dank der entgegengerichteten Querkomponenten eine überaus stabile Anordnung. Dabei sind Fertigung und Montage trotz hoher Genauigkeit grundsätzlich unproblematisch.

Gemäß Anspruch 7 kann jedes Schraubloch bodenseitig eine Schulter zur Abstützung des Schraubkopfes haben, was zur schnellen und sicheren Montage beiträgt. Für die Herstellung ist es insbesondere günstig, wenn die Schrauben nach Anspruch 8 zueinander spitzwinkelig stehen und in Sacklöcher der Wellen eingreifen, die sich exakt fertigen lassen.

Nach Anspruch 9 sind als Auflager einzeln verschraubbare Stützkörper vorgesehen, namentlich Aluminium-Druckgußteile oder -Profile mit einer Grundplatte und damit einstückigem Stützprofil. Dies erlaubt es sehr einfach, nach dem Baukastenprinzip Linearvorschübe modular auszuführen, wobei gemäß Anspruch 10 zur Verlängerung eines Wellenpaares zwei aneinanderstoßende Wellenenden an dem Stützkörper durch Verschraubung an dem Gegenlochpaar gegen eine im mittleren Loch festgelegte Durchgangswelle verspannt werden können. Auf diese Weise lassen sich auch sehr große Baulängen der Linearführung bedarfsweise herstellen.

Die Erfindung sieht als Alternative in Anspruch 11 vor, daß das Auflager ein mit dem durchgehenden Stützprofil einstückiger Schienenkörper ist, der in gleichmäßigen Abständen Schraubloch-Gruppen aufweist und ein Flachprofil mit ebener Bodenfläche sein kann. Bei dieser Bauform ist das Wellenpaar gleichmäßig über seine ganze Länge abgestützt, so daß sich besonders hohe Genauigkeiten und Belastbarkeiten erzielen lassen.

Für die Modul-Bauweise sieht Anspruch 12 vor, daß der Schienenkörper Bestandteil eines vorzugsweise kastenförmigen Hohlprofils ist, wobei nach Anspruch 13 in die Bodenfläche zueinander geneigte Schraubkopf-Stützleisten eingelassen sein können. Solche Hohlprofile sind sehr stabile Einheiten, die dem zu führenden Körper - im allgemeinen einem Laufwagen mit einer Trageplatte - zugleich mechanischen Schutz bieten. Dafür ist es günstig, wenn das Hohlprofil gemäß Anspruch 14 an einer Seite offen und zur Aufnahme von Dichtlippen mit Aussparungen versehen ist, insbesondere an der dem Stützprofil gegenüberliegenden Seite. Dies ermöglicht es, die beweglichen Teile bequem einzubringen und an der offenen Seite zu verfahren, während das im übrigen rundum geschlossene Hohlprofil äußere Einwirkungen weitestgehend ausschließt.

In weiterer Ausgestaltung der Erfindung kann das Hohlprofil nach Anspruch 15 Bestandteil eines Mehrkammersystems sein, insbesondere eines Dreikammersystems, wobei an einen geschlossenen Mittenhohlraum beiderseits je ein Hohlprofil mit innerem Schienenkörper anschließt. Derartige Mehrkammerprofile sind in gewünschten Längen herstellbar und geeignet, bei großer Stabilität zumindest zwei gekoppelte oder unabhängige Linearführungs-Antriebe aufzunehmen.

Gemäß Anspruch 16 hat der bzw. jeder Laufwagen im Gehäuse eine Anlagefläche, insbesondere einen Steg, woran Wälzlager verspannbar sind, die jeweils den Schaft einer Laufrolle lagern. Dank dieser überaus vorteilhaften Maßnahme können aus der Serienfertigung kommende Wälzlager praktisch spielfrei eingespannt werden, so daß sich leichtgängige Laufrollen mit hoher Präzision für schnelle Bewegungsabläufe benutzen lassen.

Die Weiterbildung nach Anspruch 17 sieht vor, daß der Laufwagen einen Schieber zum reißverschlußartigen Betätigen der selbstschließend ausgebildeten Dichtlippen hat. Dieser Schieber kann mit der Tragplatte verbunden oder damit einstückig sein. Er bewirkt, daß die normalerweise geschlossenen Dichtlippen im wesentlichen nur am jeweiligen Standort des Laufwagens geöffnet werden.

Ein wichtiger Vorteil der Erfindung beruht ferner darauf, daß laut Anspruch 18 zwei voneinander unabhängige Antriebe für den Laufwagen vorhanden sein können, z.B. an einem Kreuzsystem mit einer Horizontalführung und einer Vertikalführung. Dabei sieht Anspruch 19 vor, daß die Antriebe wahlweise Spindeltriebe oder Zahnriementriebe oder eine Kombination davon sind.

Für die Stromversorgung ist es zweckmäßig, wenn nach Anspruch 20 Antriebselemente, -leitungen u.dgl. im Mittenhohlraum untergebracht sind, dessen Wandungen sowohl zur Befestigung als auch zur Kapselung solcher Elemente dienen können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1a: eine Querschnittsansicht einer Linearführung,
- Fig. 1b: eine Draufsicht auf ein Auflager,
- Fig. 1c: eine Draufsicht auf die Linearführung von Fig. 1a,
- Fig. 2a: eine Stirnansicht einer Linearführung,
- Fig. 2b: eine Druntersicht der Linearführung von Fig. 2a,
- Fig. 2c: eine Stirnansicht, teilweise auseinandergezogen und im Schnitt, eines Laufwagens für die Linearführung von Fig. 2a und 2b,
- Fig. 2d: eine Draufsicht auf den Laufwagen von Fig. 2c,
- Fig. 2e: eine Stirnansicht der Linearführung von Fig. 2a mit einem Laufwagen,
- Fig. 3a: eine zum Teil auseinandergezogene Querschnittsansicht eines Rollenwagens,
- Fig. 3b: eine Schnittansicht entsprechend Fig. 3a in Einbaustellung auf einer Linearführung,
- Fig. 3c: eine Draufsicht auf den Rollenwagen von Fig. 3a bzw. 3b,
- Fig. 4a: eine Stirnansicht, teilweise im Schnitt, eines Kugellaufwagens,
- Fig. 4b: eine Draufsicht auf den Kugellaufwagen von Fig. 4a,
- Fig. 4c: eine Stirnansicht eines Laufwagens entsprechend Fig. 4a eingebaut in ein Hohlprofil,
- Fig. 4d: eine Teildraufsicht auf die Anordnung von Fig. 4c,
- Fig. 5a: eine Stirnansicht, teilweise im Schnitt, eines Rollenwagens,
- Fig. 5b: eine Draufsicht auf den Rollenwagen von Fig. 5a,
- Fig. 5c: eine Stirnansicht des Rollenwagens von Fig. 5a bzw. 5b eingebaut in ein Hohlprofil mit einer Linearführung,
- Fig. 5d: eine Stirnansicht des Hohlprofils mit Linearführung von Fig. 5c für sich,
- Fig. 6a: eine Stirnansicht eines Dreikammersystems mit Rollenwagen in äußeren Hohlprofilen,
- Fig. 6b: eine Stirnansicht entsprechend Fig. 6a, jedoch mit Kugellaufwagen,
- Fig. 6c: eine Stirnansicht entsprechend Fig. 6a bzw. 6b, jedoch mit einem Kugel- und einem Rollenwagen,
- Fig. 6d: eine Stirnansicht des Dreikammerprofils entsprechend Fig. 6a/6b/6c für sich,
- Fig. 7: eine Vorderansicht eines Linearführungs-Kreuzsystems,
- Fig. 8: eine Vorderansicht einer Antriebseinheit für das Linearführungssystem von Fig. 7,
- Fig. 9: eine auseinandergezogene Schnittansicht einer Rollenlagerung entsprechend der Linie IX-IX in Fig. 8 und
- Fig. 10: eine auseinandergezogene Schnittansicht einer Ritzellagerung entsprechend der Linie X-X in Fig. 8.

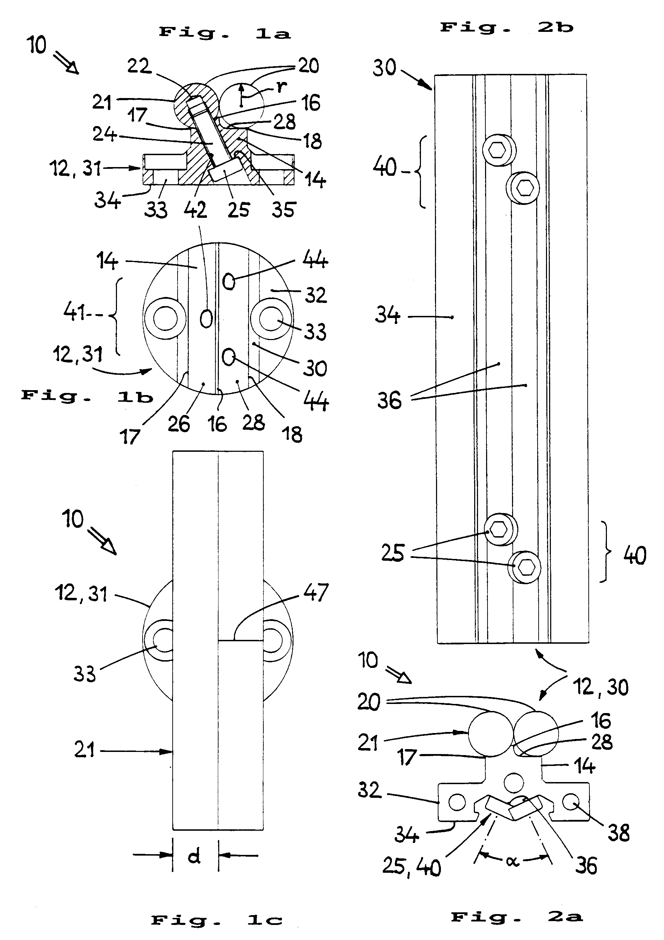

Aus den einander zugeordneten Fig. 1a, 1b, 1c ersieht man eine allgemein mit 10 bezeichnete Linearführung mit einem Auflager 12, dessen Stützprofil 14 eine mittlere Firstkante 16 und dazu parallele Außenkanten 17, 18 aufweist. Ein mit Sacklöchern 22 versehenes Wellenpaar 20 ist mittels Schrauben 24 an dem Auflager 12 befestigt. Dessen Stützprofil 14 hat zwischen der Außenkante 17 und der Firstkante 16 eine Hohlkehle 26, deren Krümmungsradius genau gleich demjenigen einer Welle 20 ist. Zwischen der Firstkante 16 und der Außenkante 18 befindet sich eine Stufe 28, die stärker ausgekehlt ist.

Gemäß Fig. 1b ist das Auflager 12 als Stützkörper 31 mit einer Grundplatte 32 ausgebildet, die zur ebenen Bodenfläche 34 senkrecht verlaufende Befestigungslöcher 33 aufweist. Eine Besonderheit dieses Stützkörpers 31 ist, daß er eine Dreiecks-Gruppe 41 von Bohrungen aufweist, nämlich ein mittig angeordnetes Schrägloch 42 und in gleichmäßigem Längsabstand davor bzw. dahinter ein in Gegenrichtung geneigtes Gegenlochpaar 44. Die Schräglöcher 42, 44 sind als Stufenbohrungen ausgebildet, so daß im Inneren des Stützprofils 14 eine Schulter 35 gebildet ist, an welcher der Schraubkopf 25 der Befestigungsschrauben 24 zur Anlage kommt.

Die Achsen der Schraublöcher 42, 44 und mithin der Schrauben 24 schließen untereinander den Winkel α ein (Fig. 2b), der im Bereich zwischen 0^{o} und 90^{o}, bevorzugt bei etwa 45^{o} liegt.

Die Montage der Linearführung 10 erfolgt so, daß zunächst eine Welle 20 (links in Fig. 1a, 1c) mit der durch das Mittelloch 42 geführten Schraube 24 an die Hohlkehle 26 gezogen wird. Die anschließend aufgelegte andere Welle 20 (rechts in Fig. 1a, 1c) wird sodann mit Schrauben 24, welche durch das Gegenlochpaar 44 in die entsprechenden Sacklöcher 22 eingreifen, an die erste Welle 20 gespannt, wodurch eine exakte Parallelführung gewährleistet ist. Die Querkomponenten der Schraubkräfte halten die Wellen 20 in gleichmäßiger Linienberührung und zugleich mit großer Steifigkeit auf dem Stützprofil 14.

Ferner ist aus Fig. 1a, 1c zu ersehen, daß man in dieser Weise Wellenverlängerungen bewirken kann, indem eine durchgehende Welle 20 (links) auf dem Auflager 12 bzw. dem Stützkörper 31 festgelegt wird, worauf mit einem Stoß 47 aneinander anschließende Wellenenden mit Gegenverschraubungen 24/44 parallel fixiert werden. Die in Längsrichtung folgenden Auflager 12 bzw. Stützkörper 31 sichern diese Montage.

Die Wellen 20 sind bevorzugt Präzisionsstahlwellen. Als Auflager 12 können Stützkörper 31 Verwendung finden, die Aluminium-Druckgußteile und daher ebenso leicht wie billig sind. Die Wellen 20 stabilisieren sich gegenseitig.

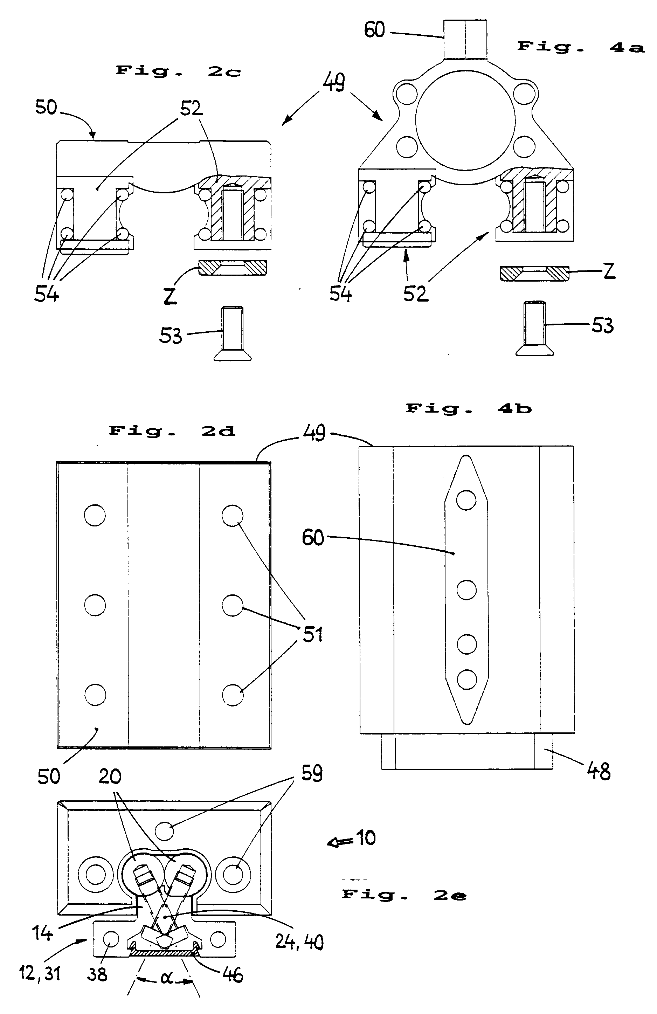

Fig. 2a und 2b zeigen eine andere Linearführung 10, deren Auflager 12 ein als Flachprofil ausgebildeter Schienenkörper 30 ist, dessen Stützprofil 14 jenem des Stützkörpers 31 (Fig. 1a, 1b) entspricht. Der die Wellen 20 halternde Schienenkörper 30 kann ein Aluminiumprofil und für frontseitige Befestigungen und Durchführungen mit Ausnehmungen 38 versehen sein. In den ebenen Boden 34 sind als Bohrhilfe Einzüge 36 eingelassen, die - wie die Schulter 35 im vorigen Ausführungsbeispiel - den Schraubkopf 25 abstützen, wenn die Schrauben 24 zur Befestigung des Wellenpaars 20 in Schraubloch-Gruppen 40 eingezogen sind. Dies sind hier Paare von jeweils im Winkel α zueinander entgegengesetzt geneigten Bohrungen beiderseits der Firstkante 16. Eine Abdeckleiste 46 verschließt den Schienenkörper 30 an der Unterseite.

Auf das Wellenpaar 20 wird ein Laufwagen 49 (Fig. 2c, 2d, 2e) so aufgesetzt, daß seitlich an ihm Linearkugelreihen 54 von beiden Seiten her an den Außenflächen 21 (Fig. 1a) des Wellenpaars 20 zur Anlage kommen. Halteschrauben 53 mit Stahlplatte legen die unteren Linearkugelreihen 54 an dem Laufwagen 49 fest, wobei durch den Bearbeitungsgrad der Anlageflächen nach Bedarf verschiedene Vorspannungen realisierbar sind. Die Kugellaufwagen 49 sind hochbelastbar, da die Abstützung an den Außenflächen 21 des Wellenpaars 20 durch umlaufende Kugelreihen 54 (Fig. 2c) erfolgt. Eine Tragplatte 50 des Laufwagens 49 ist mit Gewinde löchern 51 versehen, um eine linear zu bewegende Vorrichtung anschrauben zu können (Fig. 2d). Bohrungen 59 können zum Anschrauben eines Abstreifers bzw. als Schmiernippel dienen (Fig. 2e).

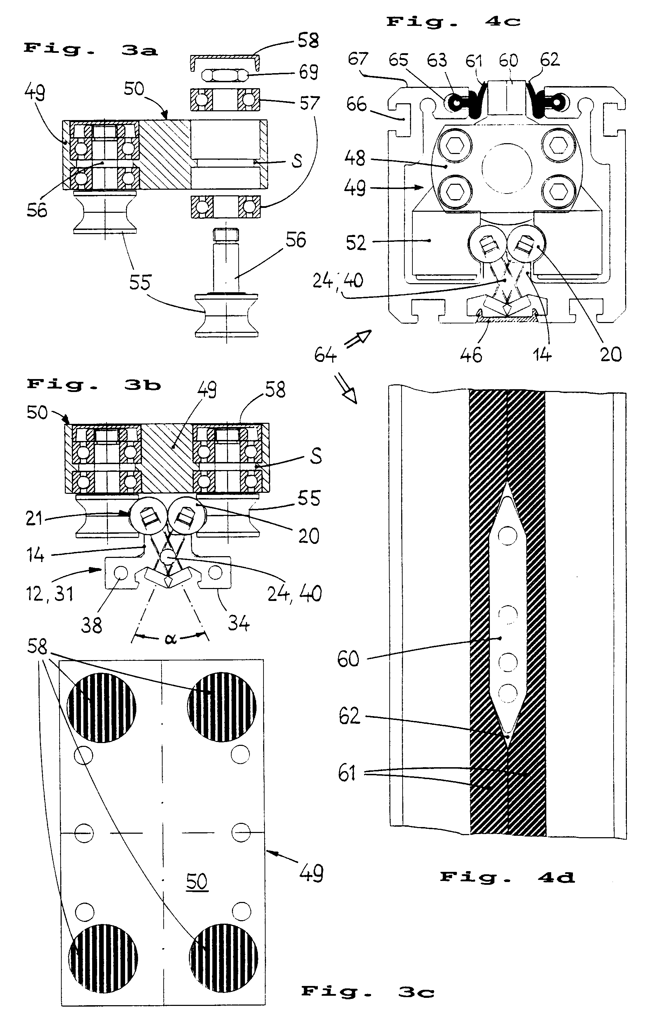

Im Ausführungsbeispiel von Fig. 3a, 3b, 3c ist der Laufwagen 49 mit Laufrollen 55 versehen, deren Schaft 56 jeweils in Wälzlagern 57 gelagert, durch eine Mutter 69 gehalten und von Abdeckstopfen 58 überdeckt ist. Das Gehäuse des Laufwagens 49 enthält als Anlagefläche jeweils einen Steg S, an dem zwei Wälzlager 57 beiderseits praktisch spielfrei verspannt sind. Rollenlaufwagen 49 der dargestellten Art sind insbesondere für schnelle Bewegungsabläufe geeignet. Die gehärteten, geschliffenen, doppelt gelagerten und spielfrei eingestellten Laufrollen 55 lassen ungewollte Verstellungen nicht zu, obwohl aus der Serienfertigung stammende Lager 57 eingesetzt werden können. Die Abstände der Laufrollen 55 ergeben die gewünschte Vorspannung. Die Tragplatte 50 des Laufwagens 49 ist wiederum mit Gewindelöchern 51 zur Aufnahme von zu tragenden Gegenständen versehen. Als Auflager 12 dient ein Schienenkörper 30 nach Art von Fig. 2a.

Man erkennt, daß die Kugellaufwagen der Ausführung gemäß Fig. 2b, 2c, 2d, 2e mit den Rollenlaufwagen des Beispiels von Fig. 3a, 3b, 3c voll kompatibel, also austauschbar sind. Dies ist beim Umrüsten äußerst vorteilhaft, wenn etwa von Hochlast auf schnelle Bewegungsabläufe oder umgekehrt übergegangen werden muß.

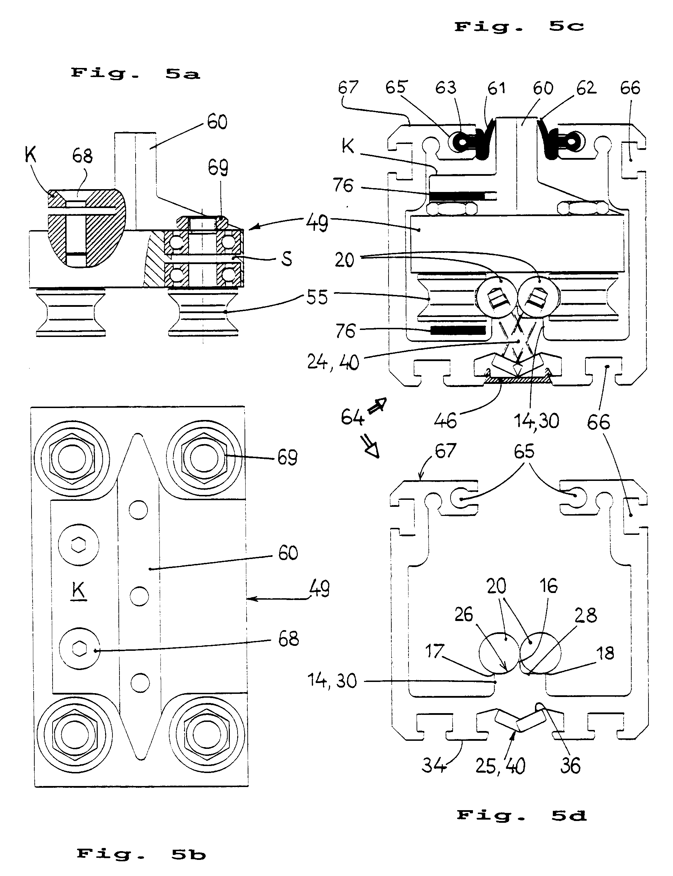

Eine weitere Ausführungsform eines Kugellaufwagens 49 ist in Fig. 4a, 4b gezeichnet. Hierbei sind wiederum Linearkugellager 52 mit Senkschrauben 53 und Zwischenscheiben Z so befestigt, daß die Kugelreihen 54 an den Außenflächen 21 des Wellenpaares 20 (Fig. 4c) zur Anlage kommen. Stirnseitig ist der Laufwagen 49 mit einer durch vier Befestigungsschrauben gehaltenen Flanschmutter 48 versehen (Fig. 4c). Er trägt statt einer Tragplatte einen Schieber 60, der beim Einbau in ein Hohlprofil 64 (Fig. 4c, 4d) mit Dichtlippen 61 reißverschlußartig zusammenwirkt. Die bevorzugt aus Teflon (Polytetrafluorethylen) bestehenden Dichtlippen 61 sind mit Rastleisten 63 in Aussparungen 65 des Hohlprofils 64 einschnappend gehalten. Sie haben selbstschließende Verschlußkanten 62, die beim Verfahren des Laufwagens 49 von dem Schieber 60 in Laufrichtung geöffnet werden und sich dahinter wieder schließen.

Die Dichtlippen 61 schützen die Anordnung an der Oberseite, die im übrigen von einer Deckfläche 67 des Hohlprofils 64 übergriffen wird, dessen Boden 34 wiederum eingelassene Stützleisten 36 mit einer Abdeckleiste 46 aufweist. Je nach dem gewünschten Verwendungszweck hat das Hohlprofil 64 in Längsrichtung verlaufende Einzüge 66, die zu Befestigungszwecken dienen können.

Der Laufwagen 49 des Ausführungsbeispiels von Fig. 5a bis 5d ist als Rollenlaufwagen ausgebildet, dessen Laufrollen 55 von einer Rollenhalterung 69 getragen werden. Der Schieber 60 hat einen geschlitzten Klotz K (Fig. 5a, 5b) zur Aufnahme eines Zahnriemens 76 (Fig. 5c), an dem er mit Halteschrauben 68 festgelegt wird. Wiederum wirkt der Schieber 60 mit selbstschließenden Dichtlippen 61 an der Oberseite 67 des Hohlprofils 64 zusammen. Letzteres ist für sich in Fig. 5d dargestellt. Hier wird deutlich, daß das Hohlprofil 64 bodenseitig mit dem Stützprofil 14 in Form eines Schienenkörpers 30 einstückig ist. Auch hierbei ist eine runde Hohlkehle 26 durch die Firstkante 16 von der stärker ausgekehlten Stufe 28 getrennt, an welche die zweite Welle (rechts in Fig. 5c, 5d) herangezogen wird, nachdem zuvor die erste Welle (links in Fig. 5c, 5d) an der Hohlkehle 26 befestigt worden war.

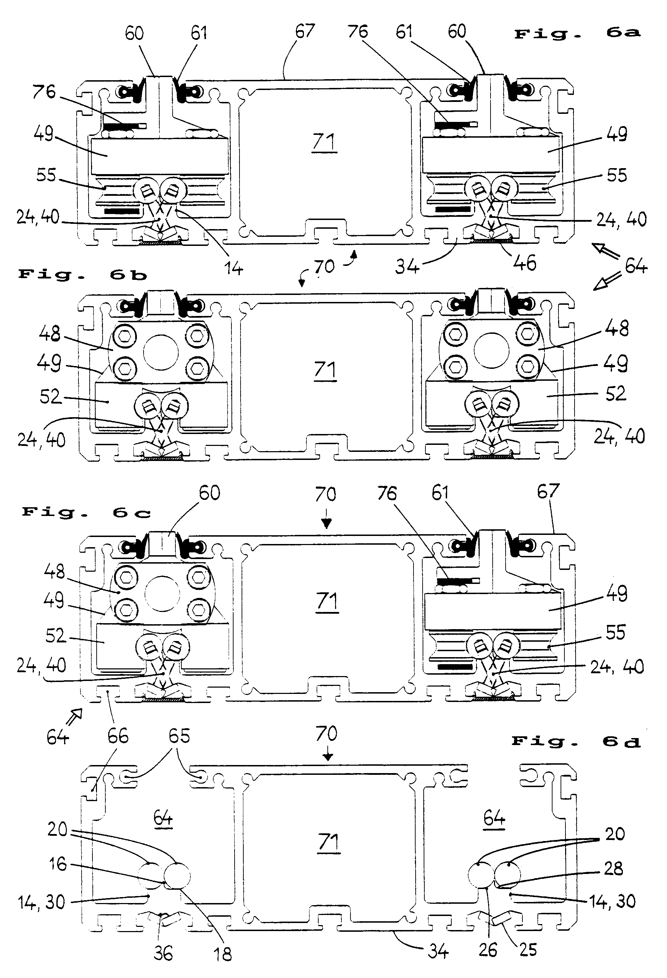

Einen prinzipiell ähnlichen Aufbau haben die Linearführungen der Ausführungsbeispiele gemäß Fig. 6a, 6b, 6c, 6d. Hier sind Dreikammersysteme 70 dargestellt, die einen Mittenhohlraum 71 aufweisen, welcher einstückig mit äußeren Hohlprofilen 64 ist und die Versorgungsleitungen und sonstige Nebeneinrichtungen aufnehmen kann. Letztere kapseln jeweils einen Laufwagen 49, welcher bei der Bauform von Fig. 6a mit Laufrollen 55 bestückt ist, während im Beispiel der Fig. 6b Kugellaufwagen 49 mit Kunststoff-Umlenkkörpern für Kugelreihen 54 vorgesehen sind. Die Anordnung von Fig. 6c zeigt eine Mischform, bei welcher die linke Linearführung einen hochbelastbaren Kugellaufwagen und die rechte Linearführung einen leichtgängigen Rollenlaufwagen 49 aufweist, die jeweils separat angetrieben werden können, wahlweise mit Kugelgewindetrieb oder Zahnriemen. Das Kastenprofil für sich ist in Fig. 6d gezeichnet, woraus man den sehr einfachen und übersichtlichen Aufbau erkennt.

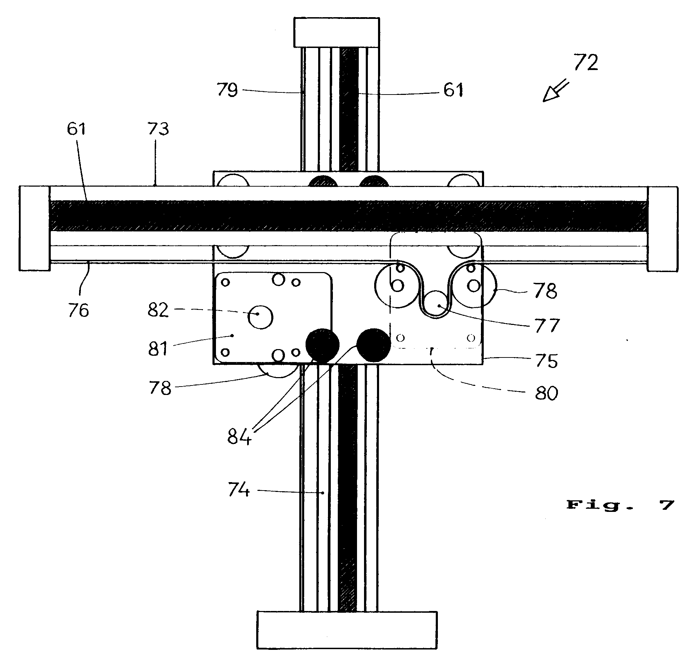

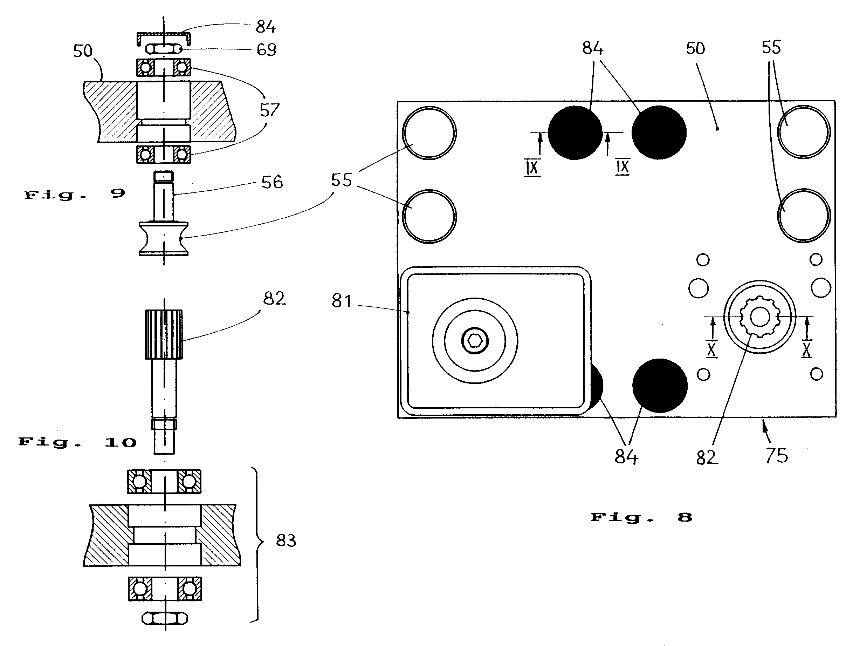

Ein Anwendungsbeispiel mit einem Kreuzsystem 72 ist in Fig. 7 veranschaulicht. Hier ist eine Horizontalführung 73 und eine Vertikalführung 74 mit einer gemeinsamen Antriebseinheit 75 kombiniert. Die Horizontalführung 73 kann über einen Zahnriemen 76, der über Umlenkrollen 78 läuft, von einer Antriebsrolle 77 eines Motors 80 hin und her verfahren werden. Ein zweiter Zahnriemen 79 besorgt unter dem Antrieb eines Motors 81 mit Ritzel 82 über entsprechende Rollen 77, 78 die Vertikalbewegung des Kreuzrollenlaufwagens, der überkreuz 4 x 2 = 8 Laufrollen hat (Fig. 8). Deren Aufbau und Lagerung ist aus Fig. 9 ersichtlich. Fig. 10 veranschaulicht die Lagerung 83 des Ritzels 82. Abdeck-Kappen 84 verschließen die Lagerungen der einzelnen Laufrollen 55.

Die beschriebene Modulbauweise eignet sich für CNC-gesteuerte Anlagen, Maschinen, Achsen, Führungen zu Bearbeitungszwecken sowie für leichte und mittelschwere Handling-Aufgaben in allen Industriebereichen einschließlich Reinräumen.

Die Erfindung ist nicht auf die beschriebenen Ausführungsbeispiele beschränkt. Grundsätzlich werden aber für die erfindungsgemäße Linearführung 10 stets zwei Wellen 20 an einem Auflager 12 durch zueinander im Winkel α stehende Schrauben 24 in linienförmiger Anlage gegeneinander verspannt. Als Stützkörper 30 dienen Aluminiumteile mit einstückigem Stützprofil 14, dessen Rundkehle 26 mit einer Firstkante 16 zu einer ausgekehlten Stufe 28 übergeht. Ein Schraubloch 42 ist zu einem spiegelsymmetrisch angeordneten Gegenloch oder einem Lochpaar 44 spitzwinkelig geneigt. Aneinanderstoßende Wellenenden sind an Einzelkörpern 30 durch Verschraubung am Gegenlochpaar 44 gegen eine am Mittelloch 32 festgelegte Durchgangswelle verspannbar. Ein durchgehender Schienenkörper mit beabstandeten Schraubloch-Gruppen 40, 41 kann Bestandteil eines kastenförmigen Hohlprofils 64 sein. Bei einem Dreikammersystem 70 schließen an einen Mittenhohlraum 71 außen Hohlprofile 64 mit innerem Schienenkörper 30 an. Wenigstens ein Antrieb bewegt einen Laufwagen 49, der mit vier Linearkugelreihen 54 oder vier Rollen 55 an den Wellen-Außenflächen 21 anliegt und einen Schieber für Reißverschluß-Dichtlippen 61 tragen kann, die selbstschließend an einer offenen Seite des Hohlprofils 64 sitzen.

### Bezugszeichen-Liste

- α: Winkel
- d: Wellendurchmesser
- K: Klotz
- r: Wellenradius
- S: Steg
- Z: Zwischenscheiben
- 10: Linearführung
- 12: Auflager
- 14: Stützprofil
- 16: Firstkante
- 17, 18: Außenkanten
- 20: Wellen(paar)
- 21: Außenflächen
- 22: Sacklöcher
- 24: Schrauben
- 25: Schraubkopf
- 26: Hohlkehle
- 28: Stufe
- 30: Flachprofil / Schienenkörper
- 31: Stützkörper
- 32: Grundplatte
- 33: Befestigungslöcher
- 34: Bodenfläche
- 35: Schulter
- 36: Einzüge
- 38: Ausnehmung(en)
- 40: Paare
- 41: (Dreiecks-)Gruppe
- 42: mittleres Loch
- 44: Gegenlochpaar
- 46: Abdeckleiste
- 47: Stoß
- 48: Flanschmutter
- 49: Laufwagen
- 50: Tragplatte
- 51: Gewindelöcher
- 52: Linearkugellager
- 53: Halteschraube(n)
- 54: Kugelreihen
- 55: Laufrollen
- 56: Schaft
- 57: Wälzlager
- 58: Abdeckstopfen
- 59: Längsbohrungen
- 60: Schieber
- 61: Dichtlippen
- 62: Verschlußkanten
- 63: Rastleisten
- 64: Hohlprofil
- 65: Aussparung(en)
- 66: Einzüge
- 67: Deckfläche
- 68: Halteschrauben
- 69: Rollenhalterung
- 70: Dreikammersystem
- 71: Mittenhohlraum
- 72: Kreuzsystem
- 73: Horizontalführung
- 74: Vertikalführung
- 75: Laufwagen
- 76: Zahnriemen
- 77: Antriebsrolle
- 78: Führungsrollen
- 79: zweiter Zahnriemen
- 80: Motor
- 81: zweiter Motor
- 82: Ritzel
- 83: Lagerung
- 84: Kappen

## Patentansprüche

1. Linearführung (10) mit einem Auflager (12) und darauf paarweise parallel gehaltene Wellen (20), auf denen wenigstens ein zu führender Körper bzw. Laufwagen (49) mittels Linearkugellagern (52), Rollen (55) o.dgl. abstützbar ist, welche das Wellenpaar (22) übergreifend an dessen freien Außenflächen (21) roll- bzw. gleitbeweglich anliegen, dadurch **gekennzeichnet**, daß die Wellen (20) an dem Auflager (12) durch zueinander im Winkel (α) stehende Schrauben (24) gegeneinander verspannt und gegeneinander in linienförmiger Anlage gehalten sind.

2. Linearführung nach Anspruch 1, dadurch **gekennzeichnet**, daß das bzw. jedes Auflager (12) ein Stützprofil (14) mit einer mittig angeordneten Firstkante (16) und zwei dazu parallelen Außenkanten (17, 18) aufweist, deren Querabstand zur Firstkante (16) kleiner als der Wellendurchmesser (d) ist.

3. Linearführung nach Anspruch 2, dadurch **gekennzeichnet**, daß das bzw. jedes Auflager (12) zwischen der Firstkante (16) und der einen Außenkante (17) eine dem Wellenradius (r) formgleiche Hohlkehle (26) und zwischen der Firstkante (16) und der anderen Außenkante (18) eine stärker ausgekehlte Stufe (28) aufweist.

4. Linearführung nach Anspruch 2 oder 3, dadurch **gekennzeichnet**, daß das bzw. jedes Auflager (12) in Abständen angeordnete Gruppen (40, 41) von dicht benachbarten Schraublöchern aufweist, die das Auflager schräg durchsetzen und zur Firstkante (16) spiegelsymmetrisch verlaufen.

5. Linearführung nach Anspruch 4, dadurch **gekennzeichnet**, daß jede Gruppe ein Paar (40) zueinander entgegengesetzt geneigter Schraublöcher aufweist (vergl. Fig. 2a, 2b).

6. Linearführung nach Anspruch 4, dadurch **gekennzeichnet**, daß jede Gruppe (41) drei Schraublöcher aufweist, von denen ein in Längsrichtung mittleres Loch (42) entgegen einem entlang der Firstkante (16) spiegelsymmetrisch dazu angeordneten Gegenlochpaar (44) geneigt ist.

7. Linearführung nach einem der Ansprüche 4 bis 6, dadurch **gekennzeichnet**, daß jedes Schraubloch (42, 44) bodenseitig eine Schulter (35) zur Abstützung des Schraubkopfes (25) hat.

8. Linearführung nach wenigstens einem der Ansprüche 1 bis 7, dadurch **gekennzeichnet**, daß die Schrauben (24) zueinander spitzwinkelig stehen und in Sacklöcher (22) der Wellen (20) eingreifen.

9. Linearführung nach einem der Ansprüche 1 bis 8, dadurch **gekennzeichnet**, daß als Auflager (12) einzeln verschraubbare Stützkörper (31) vorgesehen sind, namentlich Aluminium-Druckgußteile oder -Profile mit einer Grundplatte (32) und damit einstückigem Stützprofil (14).

10. Linearführung nach Anspruch 6 und 9, dadurch **gekennzeichnet**, daß zur Verlängerung eines Wellenpaares (20) zwei mit einem Stoß (47) aneinander anschließende Wellenenden (Fig. 1c) an dem Stützkörper (31) durch Verschraubung an dem Gegenlochpaar (44) gegen eine am mittleren Loch (32) festgelegte Durchgangswelle verspannt sind.

11. Linearführung nach Anspruch 5 und 9, dadurch **gekennzeichnet**, daß das Auflager (12) ein mit dem durchgehenden Stützprofil (14) einstückiger Schienenkörper (30) ist, namentlich ein Flachprofil (30) mit ebener Bodenfläche (34), das in gleichmäßigen Abständen Schraubloch-Paare (40) aufweist.

12. Linearführung nach Anspruch 11, dadurch **gekennzeichnet**, daß der Schienenkörper Bestandteil eines vorzugsweise kastenförmigen Hohlprofils (64) ist.

13. Linearführung nach Anspruch 11 oder 12, dadurch **gekennzeichnet**, daß in die Bodenfläche (34) zueinander geneigte Einzüge (36) eingelassen sind.

14. Linearführung nach Anspruch 12 oder 13, dadurch **gekennzeichnet**, daß das Hohlprofil (64) an einer Seite offen und zur Aufnahme von Dichtlippen (61) mit Aussparungen (65) versehen ist, insbesondere an der dem Stützprofil (14) gegenüberliegenden Seite (67).

15. Linearführung nach einem der Ansprüche 12 bis 14, dadurch **gekennzeichnet**, daß das Hohlprofil (64) Bestandteil eines Mehrkammersystems ist, z.B. eines Dreikammersystems (70), wobei an einen geschlossenen Mittenhohlraum (71) beiderseits je ein Hohlprofil (64) mit innerem Schienenkörper (14, 30) anschließt.

16. Linearführungsanordnung mit einer Linearführung nach einem der Ansprüche 1 bis 15 bei der sich auf der bzw. jeder Schiene ein Laufwagen abstützt, dadurch **gekennzeichnet**, daß der bzw. jeder Laufwagen (49) im Gehäuse eine Anlagefläche, insbesondere einen Steg (S) aufweist, woran Wälzlager (57) verspannbar sind, die jeweils den Schaft (56) einer Laufrolle (55) lagern.

17. Linearführungsanordnung mit einer Linearführung nach einem der Ansprüche 12 bis 15 bei der sich auf der bzw. jeder Schiene ein Laufwagen abstützt, dadurch **gekennzeichnet**, daß der bzw. jeder Laufwagen (49) mit einem Schieber (60) zum reißverschlußartigen Betätigen von selbstschließend ausgebildeten Dichtlippen (61) versehen ist.

18. Linearführungsanordnung nach einem der Ansprüche 16 oder 17, dadurch **gekennzeichnet**, daß zwei voneinander unabhängige Antriebe für den Laufwagen (49) vorhanden sind, z.B. an einem Kreuzsystem (72) mit einer Horizontalführung (73) und einer Vertikalführung (74).

19. Linearführungsanordnung nach Anspruch 18, dadurch **gekennzeichnet**, daß die Antriebe wahlweise Spindeltriebe oder Zahnriementriebe (76, 79) oder eine Kombination davon sind.

20. Linearführungsanordnung nach Anspruch 18, dadurch **gekennzeichnet**, daß Versorgungsleitungen, Antriebselemente u.dgl. im Mittenhohlraum (71) untergebracht sind.

## Claims

1. Linear motion guide unit (10) having a support (12) and thereon pairs of parallel clamped shafts (20) on which at least one member to be guided or a carriage (49) is supportable via linear ball bearings (52), rollers (55) or the like which reach over the pair of shafts (20) for rolling or sliding engagement on their outer surfaces (21), respectively, wherein the shafts (20) are clamped to the support (12) with mutual positive line locking by bolts (24) arranged at an angle (a) relative to each other.

2. Linear motion guide unit according to claim 1, wherein each support (12) includes a rail body (14) having a central crest (16) and, parallel thereto, two outer edges (17, 18) at transversal distances to the crest (16) which are smaller than the shaft diameter (d).

3. Linear motion guide unit according to claim 2, wherein each support (12) comprises between the crest (16) and one outer edge (17) a fillet (26) matching the shaft radius (r) and between the crest (16) and the other outer edge (18) a more recessed step (28).

4. Linear motion guide unit according to claim 2 or claim 3, wherein the support or each support (12) includes groups of closely neighbouring screw holes (40, 41) which extend obliquely through the respective support and are in mirror symmetry to the crest (16).

5. Linear motion guide unit according to claim 4, wherein each group comprises a pair (40) of mutually inclined screw holes (see Figs. 2a, 2b).

6. Linear motion guide unit according to claim 4, wherein each group (41) comprises three screw holes one (42) of which, arranged centrally in respect of a longitudinal direction, is inclined oppositely to a pair of counterholes (44) lodged along the crest (16) in mirror symmetry to the central hole (42).

7. Linear motion guide unit according to any one of claims 4 to 6, wherein each screw hole (42, 44) includes at a bottom side a shoulder (35) for engagement of the bolt head (25).

8. Linear motion guide unit according to any one of claims 1 to 7, wherein the bolts (24) are at an acute angle (a) to each other and engage pocket holes (22) of the shafts (20).

9. Linear motion guide unit according to any one of claims 1 to 8, wherein as supports (12), mounting bases (31) to be individually bolted are provided, in particular diecast aluminium bodies or profiles having a base plate (32) and a rail body (14) integral therewith.

10. Linear motion guide unit according to claims 6 and 9, wherein for extension of a pair of shafts (20), two abutting shaft ends (47, Fig. 1c) are clamped to the mounting base (31) at the pair of counterholes (44) against a through-shaft bolted to the central hole (42).

11. Linear motion guide unit according to claims 5 and 9, wherein each support (12) is an extended rail body (14) integral with a rail bar, in particular with a flat bar (30) having a plane bottom face (34) and pairs of screw holes (40) arranged at regular distances.

12. Linear motion guide unit according to claim 11, wherein the rail bar is a component of a preferably box-shaped hollow section (64).

13. Linear motion guide unit according to claim 11 or claim 12, wherein mutually inclined flutes (36) are provided in the bottom face (34).

14. Linear motion guide unit according to claim 12 or claim 13, wherein one side of the hollow section (64) is open and is provided with longitudinal recesses (65) for receiving sealing lips (61), in particular at the side opposite to the rail body (14).

15. Linear motion guide unit accordig to any one of claims 12 to 14, wherein the hollow section (64) is a component of a multi-cavity system, e. g. of a three-cavity system (70) having a closed center cavity (71) and, on either side thereof, a hollow section (64) including an inner rail body (14, 30).

16. Linear motion arrangement having a linear guide unit according to any one of claims 1 to 15, a carriage being supported on the or each rail, wherein the or each carriage (49) comprises a casing with an engaging face, in particular with a rib (S) against which rolling bearings (57) are restrainable for supporting an axle (56) of a roller (55).

17. Linear motion arrangement having a linear guide unit according to any one of claims 12 to 15, a carriage being supported on the or each rail, wherein the or each carriage (49) is provided with a slide member (60) for zipping operation of self-sealing lips (61).

18. Linear motion arrangement according to claim 16 or claim 17, wherein two independent drive systems are provided for the carriage (49), e. g. at a cross bed frame (72) including a horizontal guide (73) and a vertical guide (74).

19. Linear motion arrangement according to claim 18, wherein the drive systems selectively comprise spindle drives or synchronous belt drives (76, 79) or a combination thereof.

20. Linear motion arrangement according to claim 18, wherein supply lines, cables, driving elements, etc. are housed in the center cavity (71).

## Revendications

1. Palier linéaire (10) avec un support (12) et sur celui-ci des arbres (20) par paires et parallèles, sur lesquels au moins un corps à guider ou chariot (49) peut s'appuyer moyennant des roulements à billes linéaires (52), galets (55) ou autres, qui en chevauchant la paire d'arbres (22), touchent ses surfaces extérieures libres (21) de manière à pouvoir rouler ou glisser dessus, caractérisé en ce que les arbres (20), serrés l'un contre l'autre et en contact linéaire, sont tenus contre le support (12) par des vis (24) formant un angle (α).

2. Palier linéaire selon la revendication 1, caractérisé en ce que le ou chaque support (12) a un profilé d'appui (14) avec une arête faîtière (16) disposée au centre et en plus deux arêtes extérieures parallèles (17, 18), dont l'écartement transversal envers l'arête faîtière (16) est inférieur au diamètre (d) de l'arbre.

3. Palier linéaire selon la revendication 2, caractérisé et ce que le ou chaque support (12) a, entre l'arête faîtière (16) et une des arêtes extérieures (17), une cannelure (26) de forme identique au rayon (r) de l'arbre, et, entre l'arête faîtière (16) et l'autre arête extérieure (18), un étage (28) cannelé plus fortement.

4. Palier linéaire selon la revendication 2 ou 3, caractérisé en ce que le ou chaque support (12) a des groupes de trous de vissage (40, 41) très voisins et disposés par intervalles, qui traversent obliquement le support et sont orientés en symétrie spéculaire par rapport à l'arête faîtière (16).

5. Palier linéaire selon la revendication 4, caractérisé en ce que chaque groupe a une paire (40) de trous de vissage opposées et inclinés l'un envers l'autre (cf. figures 2a, 2b).

6. Palier linéaire selon la revendication 4, caractérise en ce que chaque groupe (41) a trois trous de vissage, dont un trou (42), central en direction longitudinale, est incliné envers une paire de contre-trous (44) disposés en symétrie spéculaire le long de l'arête faîtière (16).

7. Palier linéaire selon une des revendications 4 à 6, caractérisé en ce que chaque trou de vissage (42, 44) a sur le côté du fond une épaule (35) pour donner appui à la tête de vis (25).

8. Palier linéaire selon au moins une des revendications 1 à 7, caractérisé en ce que les vis (24) forment un angle aigu et pénètrent dans des trous borgnes (22) des arbres (20).

9. Palier linéaire selon une des revendication 1 à 8, caractérisé en ce que des corps d'appui (31) vissables individuellement sont prévus en tant que supports (12), notamment des pièces ou profilés d'aluminium coulés sous pression, avec une plaque de base (32) et un profilé d'appui (14) d'une pièce avec cette dernière.

10. Palier linéaire selon la revendication 6 et 9, caractérisé en ce que pour prolonger une paire d'arbres (20), deux extrémités d'arbre se rattachant bout-à-bout (figure 1c) par un joint (47) sont serrées sur le corps d'appui (31) par vissage à la paire de contre-trous (44) contre un arbre continu fixé au trou central (42).

11. Palier linéaire selon la revendication 5 et 9, caractérisé en ce que le support (12) est un corps de rail (30) d'une pièce avec le profilé d'appui continu (14), notamment un profilé plat (30) avec une surface de base plane (34) et ayant à des écarts réguliers des paires de trous de vissage (40).

12. Palier linéaire selon la revendication 11, caractérisé en ce que le corps de rail fait partie d'un profilé creux (64) de préférence en forme de caisse.

13. Palier linéaire selon la revendication 11 ou 12, caractérisé en ce que des renfoncements (36) penchés l'un vers l'autre sont encastrés dans la surface de base (34).

14. Palier linéaire selon la revendication 12 ou 13, caractérisé en ce que le profilé creux (64) est ouvert sur un côté et pourvu d'évidements (65) pour accueillir un joint à lèvres (61), notamment sur le côté (67) opposé au profilé d'appui (14).

15. Palier linéaire selon une des revendications 12 à 14, caractérisé en ce que le profilé creux (64) fait partie d'un système à plusieurs chambres, par ex. un système à trois chambres (70), où un profilé creux respectif (64) avec un corps de rail intérieur (14, 30) se rattache de part et d'autre à un espace creux central fermé (71).

16. Arrangement de paliers linéaires avec un palier linéaire selon une des revendications 1 à 15, où un chariot s'appuie sur le ou chaque rail, caractérisé en ce que le ou chaque chariot (49) a dans le boîtier une surface d'appui, notamment une barrette (S), sur laquelle peuvent être serrés des paliers à roulement (57) logeant respectivement la tige (56) d'un galet de roulement (55).

17. Arrangement de paliers linéaires avec un palier linéaire selon une des revendications 12 à 15, où un chariot s'appuie sur le ou chaque rail, caractérisé en ce que le ou chaque chariot (49) est pourvu d'un coulisseau (60) pour actionner à la manière d'une fermeture éclair un joint à lèvres (61) autofermant.

18. Arrangement de paliers linéaires selon une des revendications 16 ou 17, caractérisé en ce qu'il y a pour le chariot (49) deux entraînements indépendants l'un de l'autre, par ex. sur un système croisé (72) avec un palier horizontal (73) et un palier vertical (74).

19. Arrangement de paliers linéaires selon la revendication 18, caractérisé en ce que les entraînements sont facultativement des entraînements à broche ou à courroie dentée (76, 79), ou une combinaison des deux.

20. Arrangement de paliers linéaires selon la revendication 18, caractérisé en ce que les conduites d'alimentation, éléments d'entraînement et autres sont logés dans l'espace creux central (71).
